# EUROPEAN PATENT APPLICATION

(11) **EP 1 780 188 A2**
(43) Date of publication of application: **02.05.2007**
(21) Application number: 06121522.4
(22) Date of filing: 29.09.2006
(51) Int. Cl.: C05F 9/04, C05F 17/02

(54) **Shed for treating materials having an organic matrix**

(30) Priority: 26.10.2005 IT TO20050761
(71) Applicant: Entsorga Italia S.R.L., 15057 Tortona (AL) (IT)
(72) Inventor: Galanzino, Gianfrancesco, 15057 Tortona (AL) (IT); Cella Mazzariol, Pietro Paolo, 15057 Tortona (AL) (IT)
(74) Representative: Robba, Pierpaolo

(57) **Abstract**

A substantially airtight dome-shaped or box shed for the aerobic biological treatment of putrescible organic matrixes, wherein walls are made of air-proof flexible materials while the roof is formed for 20-90 % of its surface of one or more transpirable membranes made of a material able to make air, water vapor, carbon dioxide transpire and able to be waterproof and, in general, impermeable to molecules having sizes higher than those of the air, water vapor or carbon dioxide.

## Description

The present invention refers to a shed for the aerobic biological treatment of putrescible organic matrixes.

More particularly, the present invention refers to a shed, for the aerobic biological treatment of putrescible organic matrixes, being a substantially airtight shed and having a substantially hemispheric dome-shaped structure or box structure preferably with a vaulted roof.

The term "substantially airtight shed", as used in the present description and claims, means a shed completely built with a preferably flexible, waterproof and gas- or vapor-proof material, except portions, located onto the dome or the roof (vault), made of transpirable membranes able to make reduced size molecules, such as the air, water vapor and carbon dioxide ones, transpire and able to be waterproof and, in general, impermeable to molecules, even in the gas/vapor phase, having sizes higher than those of the air, carbon dioxide and water vapor molecules.

The aerobic biological degradation process of vegetable and animal substances, either selected or existing inside the municipal wastes in variable measure, being carried out under controlled conditions and in the presence of microorganisms, has become widespread, in the last decades, among the treatment systems of said wastes both for their increase in value and their disposal at low environmental impact dump sites. More particularly, substances having a bio-organic origin that come from separately collected fractions of municipal solid wastes or from the collection of municipal, industrial and/or agricultural wastes are accumulated in proper zones or basins positioned inside closed places, are continuously aerated and, in case, are added up with bacterial cultures intended for the demolition of the bio-organic molecules.

After some weeks, the biodegradable substances change into a dark, dry and friable mass, called compost, that is rich in nutritive salts, essentially phosphorus- and nitrogen-based, said salts making the compost reusable as soil improver in agriculture.

In the case of non selected wastes, the residual organic portion will biochange by loosing putrescibility and humidity, thus contributing, due to the fact that the chemical/biological reaction is exothermic, to dry also other components and to make the disposal at dump sites or the utilization for energy purposes easy.

The typical problem of the plants for the compost production by biologic treatment, which is linked to the organic products biodegradation, is that of causing the formation of stinking emissions, to which problems of healthy-environmental nature and of public health, substantially due to the uncontrolled growth of insects, for instance flies and mosquitoes, are associated. For these reasons, the biodegradation process is carried out inside enclosed, as much as possible airtight, places. However, due to the fact that the biodegradation reaction is accelerated by feeding air through the reaction mass, the places are kept under pressure and airtight is not always assured.

As an alternative, in order to avoid this problem, a depression inside places is generated by means of extractor fans that direct the stinking air to chemical, physical or biological treatment systems. The presence of these treatment systems creates, however, a rise in the construction and management costs, also linked to the need of having further spaces available.

The simplification of the overall biologic treatment system becomes necessary in view of the final purpose that, in some circumstances, only consists in pre-treating the material before its disposal at dump sites. For this reason, spaces and costs have a decisive importance as far as the applicability of the biodegradation technologies is concerned.

Published US patent application no. 2002/162840 discloses composting boxes with rigid structure that are arranged side by side and that have a sloping roof, which slopings rotate around a hinge located between two slopings of two adjacent boxes at the top of the dividing wall. In order to avoid air leakages, each sloping of the roof is provided with airtight gaskets placed at their ends. Means suitable for making the slopings rotate around the hinge assure the opening/closure of the roof for loading and discharging operations of the material to be decomposed and of the compost, respectively.

As an alternative to the boxes according to the known art, the Applicant has now found a shed for carrying out aerobic biological treatment reactions of putrescible organic matrixes that assures a perfect airtight since it substantially consists of gas- and vapor-proof materials and in which the lateral portions, the upper portions or the roof, and in case the floor, are integral, that is are completely linked together without any joints.

It is, therefore, an object of the present invention to provide a substantially airtight shed for the aerobic biological treatment of putrescible organic matrixes, comprising a substantially hemispheric dome-shaped structure or, as an alternative, a box structure with at least four side walls and a roof and in which, in case, a floor completely linked to the structures by airtight welding joints exists, said shed being maintained in an upright position by a reticular stress-structure or being self-supporting because of an internal over-pressure, characterized in that the dome, the roof and, in case, the walls and the floor are made of air-proof flexible materials and in that from 20 to 90 % of the surface of the dome or of the roof is made of one or more transpirable membranes made of a material able to make air, water vapor, carbon dioxide transpire and able to be waterproof and, in general, impermeable to molecules having sizes higher than those of the air, water vapor or carbon dioxide, said transpirable membranes replacing portions of material of the dome or of the roof.

The invention is now described by making reference to the following figures, shown by way of non limiting example:
- Fig. 1 shows a plan view of a first embodiment of the invention in which the dome rests onto walls;
- Fig. 2 shows a lateral view of the first embodiment of the invention of Fig. 1;
- Fig. 3 shows a plan view of a second embodiment of the invention in which the dome rests on the ground;
- Fig. 4 shows a lateral view of the second embodiment of the invention of Fig. 3;
- Fig. 5 shows a sectional view of the second embodiment of the invention of Fig. 3.

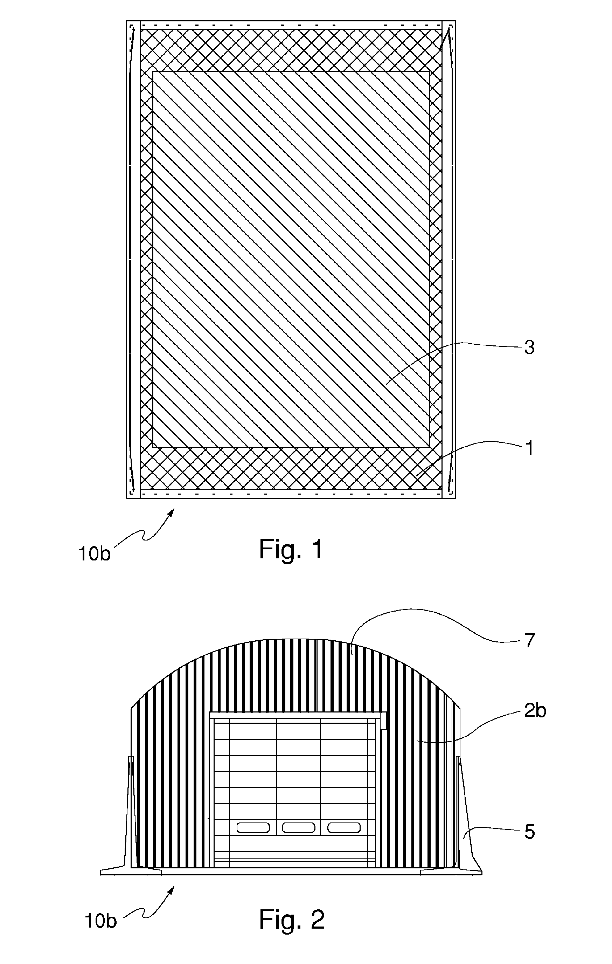

By making reference to Figures 1 and 2 it is to be noticed that, in the case of box structure 2b, the roof 7 is preferably a vaulted roof or, as an alternative, a sloping roof.

According to the present invention, the shed for the aerobic biological treatment of putrescible organic matrixes may be of any size consistent with the materials with which it is built as well as civil building codes of the country where it is built.

In general, in the case of box structure 2b, the shed can have a length comprised between 2 and 40 meters, a width comprised between 2 and 12 meters and a walls height comprised between 2 and 8 meters. Preferably, the shed can substantially have shape and size typical of the tennis fields cover sheds, except that the upper portion is formed partially of air-proof material 1 and partially of transpirant material 3.

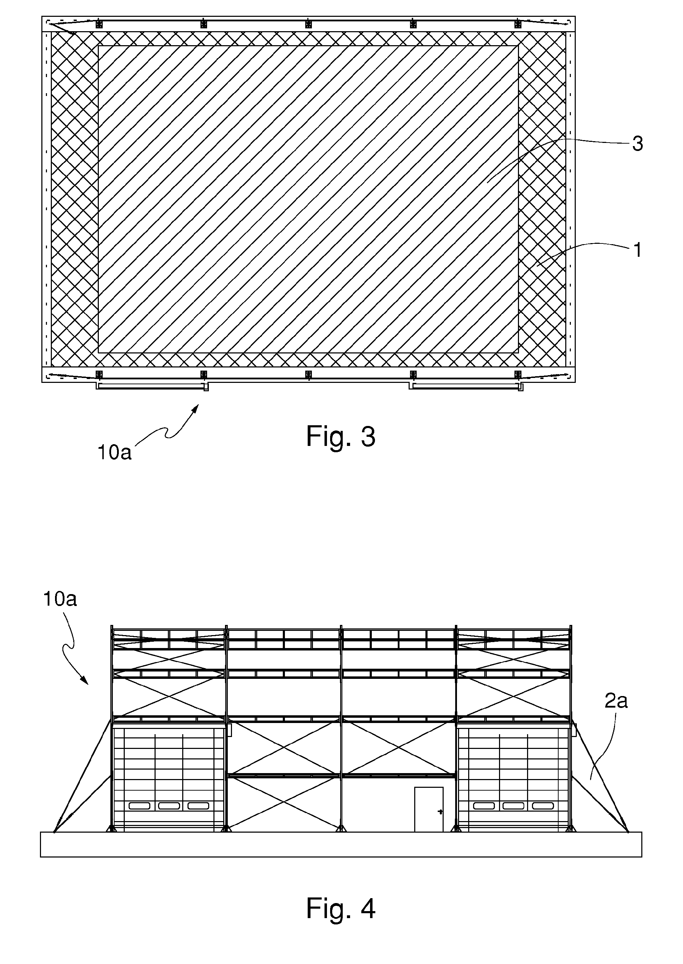

Moreover, and making reference to Figures 3 to 5, the term "substantially hemispheric dome-shaped structure" 2a, as used in the present description and claims, means essentially a dome-shaped structure having a circular base or a quadrilateral base with rounded off or straight angles, whose maximum height is comprised between 2 and 10 meters and whose base surface is similar to that of the box structure 2b.

The air-proof flexible material 1 can be a fabric of natural fiber, such as hemp or cotton, or of synthetic fiber, such as acrylic, polyester or polyamide fibers, said fabric being treated to be made impermeable with known methods, for instance by impregnation with a thermoplastic or thermosetting resin able to guarantee the impermeability to the fabric.

Preferred resins are the polyolefin resins such as polyethylene. As an alternative, the air-proof flexible material 1 can be formed by a polyethylene or PVC tarpaulin.

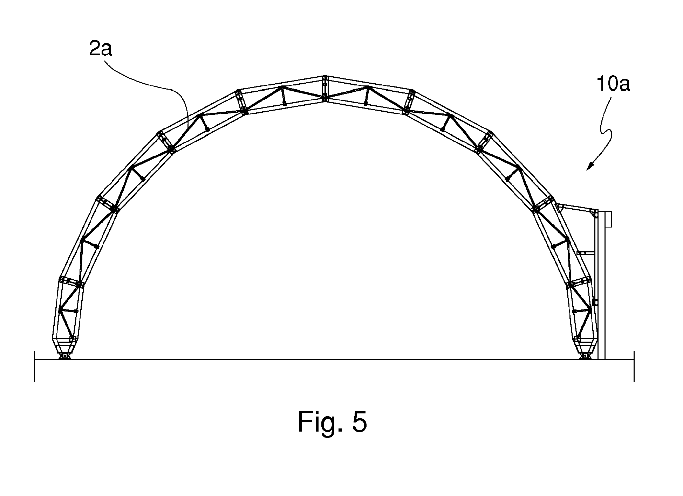

The impermeable flexible material 1 can be maintained in the upright position by a reticular stress-structure of steel or light alloy, for instance of aluminum and/or magnesium, or it can be self-supporting, as in the case of the tennis fields cover sheds, because of an internal over-pressure, for instance lower than 1 relative atmosphere, generally comprised between 0.1 and 0.5 relative atmosphere. In both cases, the impermeable flexible material 1 is anchored and sealed directly to the flooring (as represented in Figures 4 and 5) or, for instance, to concrete fixed walls 5 (as represented in Fig. 2) and sealed to assure airtightness of the internal space. To this purpose, as an alternative, it can be useful to have a floor integral with the walls, made of the same impermeable flexible material 1, so that the shed has only to be anchored to the ground without need of having a retaining fastening system.

The transpirable membranes 3 are made from known flexible fabrics, available on the market under different trade names, for instance GORETEX, by W.L. Gore & Associates Inc., or Q-RING, by Entsorga Italia S.r.l.. Examples of transpirable flexible materials are disclosed in the US patents n. 3,953,566, n. 4,194,041 and n. 5,418,054.

These semi-permeable materials, which form from 20 to 90 % of the surface of the dome or of the roof, preferably from 25 to 70 %, more preferably from 35 to 65 %, allow a considerable reduction of the stinking emissions. According to some tests carried out by the Applicant in pilot modules with different kinds of organic materials (MSW, selected wastes, etc.), the odorimetric units (OU), measured according to rule EN 13725, produced during the biofermentative processes, undergo decreases higher than 90 %, generally higher than 95 %.

The transpirable membranes 3 may be of any geometrical shape, for instance square, rectangular, circular, elliptic, with a surface that can be up to 200 m², but that generally ranges from 0.5 to 160 m², preferably from 2 to 80 m², more preferably from 5 to 20 m². They are preferably symmetrically arranged on the surface of the dome 2a or on the roof of the box structure 2b, and they are preferably applied from the inside of said structures. Once they have completed their filtration cycle, they can be easily replaced and, in case, washed and re-used. As an alternative, the whole structure comprising the impermeable portion 1 and the transpirable portion 3 can be replaced.

The zones for the treatment of the putrescible products are arranged inside the shed of the present invention. They are platforms having a porous bottom through which the air required by the aerobic bacterial flora to carry out the demolition reactions of the bio-organic molecules is blown in or sucked. This reaction generates heat and, consequently, water vapor that, by going upwards, cools till it condenses when touching walls. If it is wanted to prevent condensate drops from sliding along the outside surfaces of the shed, the structures top is equipped with longitudinal and/or transversal ribbings that allow drops to add each to another, to increase in term of weight and, therefore, to drip again on the underlying material, this way wetting it and helping the biodegradation reaction to continue. Alternatively, the condensate can be made to slide along the structures walls and collected through canalizations that are periferically placed at the basis of the shed and that convey said condensate to collection tanks.

The excess air, the carbon dioxide generated during the bio-oxidative step and the not-condensed water vapor transpire through the membranes of transpirable material 3 that, on the contrary, hold the stinking organic molecules, most of which have sizes such that they do not pass through the membranes.

At the beginning of the bio-oxidative reaction or at its end, the bio-organic material or the compost are loaded inside the platforms or discharged from them by mechanical means, for instance by a power shovel, passing through a door, for instance an upwards or laterally sliding door, provided in a given place. Obviously, the door is inserted into an airtight frame that prevent the leakage of stinking vapors, once the bio-oxidation reaction has started.

The functionality of the shed of the present invention will be better disclosed by making reference to the following practical example, which represents an illustrative non limiting embodiment thereof.

### EXEMPLE 1

A dome-shaped shed has been built having a height of about 6 meters and a base surface of about 160 m², said shed being formed by concrete walls onto which a PVC tarpaulin has been put and sealed, in order to assure tightness. The floor of the shed was made of concrete and equipped for air blowing in. Said system was formed by a set of parallel pipes, placed under the floor, spaced by a number of nozzles for distributing at the surface the air blown into the pipes by means of a blower placed outside the shed.

The upper surface of the dome has been modified by replacing a portion of the PVC with a membrane of semi-permeable material Q-Ring having an overall surface of about 120 m².

About 150 tons of pre-ground municipal wastes have been positioned on the floor, subjected to a forced aeration through the blowing in system described above.

Tests of 2 weeks (14 days) period each have been performed, during which smelling emissions produced from the semi-transpirant membrane have been measured.

Table 1 reports, as results, the average emission data taken during the different steps of the process as well as the average values of degradation efficiency.

**Table 1**

| Step of the process | Tarpaulin inlet (UO/m³) | Tarpaulin outlet (UO/m³) | Efficiency (%) |
|---|---|---|---|
| First week | 8,000 | 195 | 98 |
| Second week | 6,700 | 230 | 97 |

In a second time, the municipal solid waste has been replaced, for carrying out the composting process, with about 200 tons of mixture (50/50 by weight) of wet fraction and wood-cellulosic scraps. Similar measurements of olfactory emissions, performed during the most critical step of the process (first week), have given the average results reported in Table 2.

**Table 2**

| Step of the process | Tarpaulin inlet (UO/m³) | Tarpaulin outlet (UO/m³) | Efficiency (%) |
|---|---|---|---|
| First week | 8,100 | 510 | 94 |

## Claims

1. A substantially airtight shed for the aerobic biological treatment of putrescible organic matrixes, comprising a substantially hemispheric dome-shaped structure or, as an alternative, a box structure with at least four lateral walls and a roof, and in which a floor completely linked to the structures by airtight welding joints exists, said shed being maintained in an upright position by a reticular stress-structure or being self-supporting because of an internal over-pressure, **characterized in that** the dome, the roof and, in case, the walls and the floor are made of air-proof flexible materials and **in that** from 20 to 90 % of the surface of the dome or of the roof is made of one or more transpirable membranes made of a material able to make air, water vapor, carbon dioxide transpire and able to be waterproof and, in general, impermeable to molecules having sizes higher than those of the air, water vapor or carbon dioxide, said transpirable membranes replacing portions of material of the dome or of the roof.

2. A shed according to claim 1, wherein the structure is a box structure with rigid walls, a vaulted roof or a sloping roof.

3. A shed according to claim 2 having a length comprised between 2 and 40 meters, a width comprised between 2 and 12 meters and a walls height comprised between 2 and 8 meters.

4. A shed according to claim 1, wherein the structure is a dome-shaped structure having a circular base or a quadrilateral base with rounded off or straight angles, whose maximum height is comprised between 2 and 10 meters and whose base surface is similar to that of the box structure.

5. A shed according to anyone of the preceding claims, wherein the air-proof flexible material is a fabric of natural fiber or of synthetic fiber impregnated with a thermoplastic or thermosetting resin able to guarantee the impermeability to the fabric.

6. A shed according to anyone of the claims 1 to 4, wherein the air-proof flexible material is formed by a polyethylene or PVC tarpaulin.

7. A shed according to anyone of the preceding claims, wherein the impermeable flexible material is maintained in the upright position by a reticular stress-structure of steel or light alloy.

8. A shed according to anyone of the claims 1 to 6, wherein the impermeable flexible material is maintained in the upright position by being self-supported because of an internal over-pressure.

9. A shed according to anyone of the preceding claims, wherein the impermeable flexible material is anchored to the flooring or to rigid walls and sealed thereto so to assure airtightness of the internal space.

10. A shed according to anyone of the claims 1 to 8 comprising a floor integral with the walls, made of the same impermeable flexible material.

11. A shed according to anyone of the preceding claims, wherein the transpirable membranes are made from flexible fabrics.

12. A shed according to anyone of the preceding claims, wherein the transpirable membranes are of square, rectangular, circular, elliptic shape, with a surface up to 200 m².

13. A shed according to anyone of the preceding claims, wherein the transpirable membranes are symmetrically arranged on the surface of the dome-shaped structure or on the roof of the box structure and applied from the inside of said structures.
